# EUROPEAN PATENT APPLICATION

(11) **EP 2 833 276 A1**
(43) Date of publication of application: **04.02.2015**
(21) Application number: 13770394.8
(22) Date of filing: 27.03.2013
(51) Int. Cl.: G06F 17/30

(54) **DATA SEARCH SYSTEM AND DATA SEARCH METHOD**

(30) Priority: 29.03.2012 JP 2012077814
(71) Applicant: NTT DOCOMO, INC., Chiyoda-ku Tokyo 100-6150 (JP)
(72) Inventor: YAMADA Naoharu, Tokyo 100-6150 (JP); HARA Mirai, Tokyo 100-6150 (JP); NOAKI Kozo, Tokyo 100-6150 (JP); NAGANUMA Takefumi, Tokyo 100-6150 (JP)
(74) Representative: Viering, Jentschura & Partner Patent- und Rechtsanwälte
(86) International application number: PCT/JP2013/059066
(87) International publication number: WO 2013/146910

(57) **Abstract**

A data search system 1 conducts a search through a plurality of pieces of search target data to which at least date and time information is attached as attached data. The data search system includes search means for searching the plurality of pieces of search target data for keyword-matching data including a search keyword, and extracting, as a linked search keyword, the date and time information on a time period that is included in the attached data attached to the keyword-matching data, linked search means for searching the plurality of pieces of search target data for whether there exists linked matching data to which attached data including a time period that is close to the time period of the linked search keyword is attached, and output means for outputting the keyword-matching data and the linked matching data.

## Description

### Technical Field

The present invention relates to a data search system and a data search method.

### Background Art

The amounts of data managed by users have recently been increasing due to proliferation of social networking service (SNS) and prevalence of data management using cloud computing services. In such a situation, more sophisticated search methods are in demand in order to quickly and accurately find data desired by users from massive amounts of data managed by the users. As a conventional search method, a cross search technique is known, in which data storage devices with different schemata (data structures) are cross-searched based on an input keyword (see, for example, Patent Literature 1).

### Citation List

### Patent Literature

Patent Literature 1: Japanese Patent Application Laid-Open Publication No. 2008-102736

### Summary of Invention

### Technical Problem

However, the conventional search method presents only a search result containing the data including the search keyword input by the user. For example, users managing photo data, in particular, have recently been increasing. When the user inputs a keyword for a search, even though photo data highly relevant to the input keyword exists, the photo data cannot be presented as a search result, because such photo data does not include texts. Information issued using an SNS often does not include a content that matches a search keyword. Therefore, it is difficult to retrieve them after being issued. That is, the conventional method has a problem in that data that does not include a search keyword cannot be presented as a search result, even when the data is highly relevant to the search keyword.

The present invention is made in view of the situation as described above and aims to provide a data search system and a data search method capable of presenting all the data highly relevant to a search keyword as a search result.

### Solution to Problem

According to an aspect, the present invention provides a data search system that conducts a search through a plurality of pieces of search target data to which at least date and time information is attached as attached data. The data search system includes: search means for searching the plurality of pieces of search target data for keyword-matching data including a search keyword, and extracting, as a linked search keyword, the date and time information on a time period that is included in the attached data attached to the keyword-matching data; linked search means for searching the plurality of pieces of search target data for whether there exists linked matching data to which attached data including a time period that is close to the time period of the linked search keyword is attached; and output means for outputting the keyword-matching data and the linked matching data.

In this data search system, if there exists data including a search keyword, the date and time information included in the attached data of the data is extracted as a linked search keyword, and, if a plurality of pieces of data other than such data include any piece of data having attached data close to the linked search keyword, it can be retrieved and output as data indirectly related to the search keyword. As a result, a plurality of pieces of data can be retrieved in a linked manner based on not only the search keyword but also the attached data of the keyword-matching data, so that even data that does not include the search keyword can be retrieved and output as data highly relevant to the search keyword. Since a search is conducted based on the date and time information attached to the data including the search keyword, the linked matching data is likely to be data highly relevant to the search keyword in terms of time. According to the present invention, all the data highly relevant to the search keyword in terms of time can be output as search results.

According to another aspect, the present invention provides a data search method in which a search is conducted through a plurality of pieces of search target data to each of which at least date and time information is attached as attached data. The method includes: a search step, by search means, of searching the plurality of pieces of search target data for keyword-matching data including a search keyword, and extracting, as a linked search keyword, the date and time information included in the attached data attached to the keyword-matching data; a linked search step, by linked search means, of searching the plurality of pieces of search target data for whether there exists linked matching data to which attached data close to the linked search keyword is attached; and an output step, by output means, of outputting the keyword-matching data and the linked matching data. This search method can achieve the same effects as in the data search system described above.

### Advantageous Effects of Invention

The present invention can provide a data search system and a data search method capable of presenting all the highly relevant data as a search result.

### Brief Description of Drawings

[Fig. 1] Fig. 1 is a schematic configuration diagram of a data search system 1 according to an embodiment of the present invention.
[Fig. 2] Fig. 2 is a block diagram showing the hardware configuration of a computer included in a data search server apparatus 10 in Fig. 1.
[Fig. 3] Fig. 3 is a diagram showing a data configuration of search target data stored in the data search server apparatus 10 in Fig. 1.
[Fig. 4] Fig. 4 is a diagram showing a data configuration of search results generated by the data search system 1 in Fig. 1.
[Fig. 5] Fig. 5 is a diagram showing a. display example of search results in a terminal device 20 in Fig. 1.
[Fig. 6] Fig. 6 is a flowchart showing operation during a data search by the data search system 1 in Fig. 1.

### Description of Embodiments

Preferred embodiments of a data search system and a data search method according to the present invention will be described in details below in conjunction with the figures. In the description of the figures, the same elements are denoted with the same reference signs and an overlapping description will be omitted.

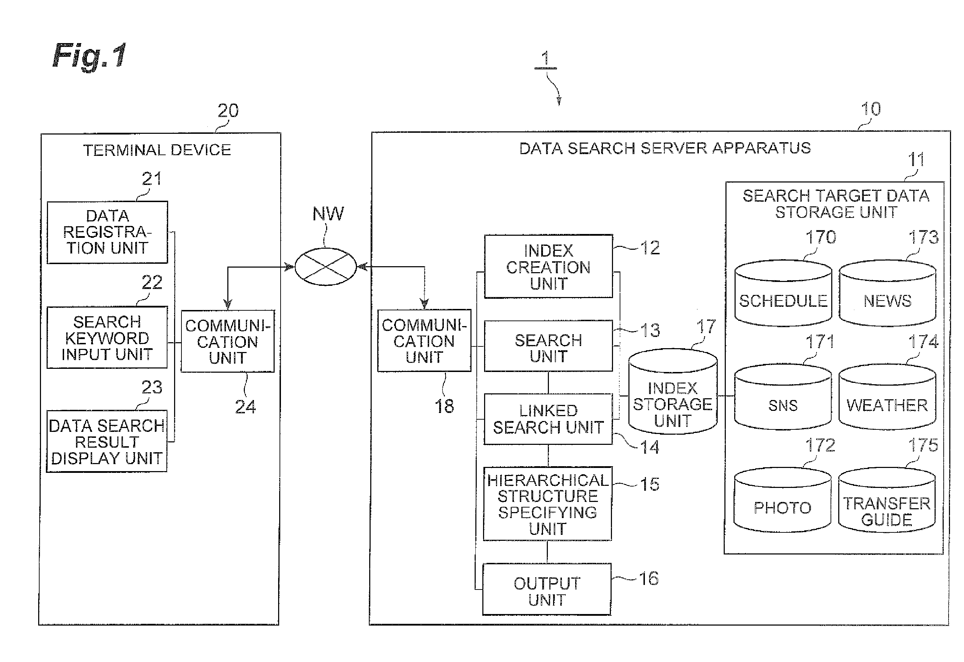

Fig. 1 is a schematic configuration diagram of a data search system 1 according to an embodiment of the present invention. The data search system 1 shown in Fig. 1 includes a data search server apparatus 10 and a terminal device 20 that performs communication with the data search server apparatus 10. The data search server apparatus 10 is a server apparatus that stores and manages search target data such as schedule data, photo data, and SNS use data that are stored by a user using the terminal device 20. The data search server apparatus 10 may be constructed of a single server apparatus or may be a server system including a plurality of server apparatuses operating in cooperation with each other. The data search server apparatus 10 can perform mutual data communication with the terminal device 20 through a communication network NW constructed of a mobile communication network employing a mobile communication scheme or a wired communication network. The data search server apparatus 10 includes a communication unit 18 and the terminal device 20 includes a communication unit 24, so that they perform mutual communication using those units. The terminal device 20 is typically a personal computer (PC), a mobile phone terminal, a smartphone, a PDA, or other devices.

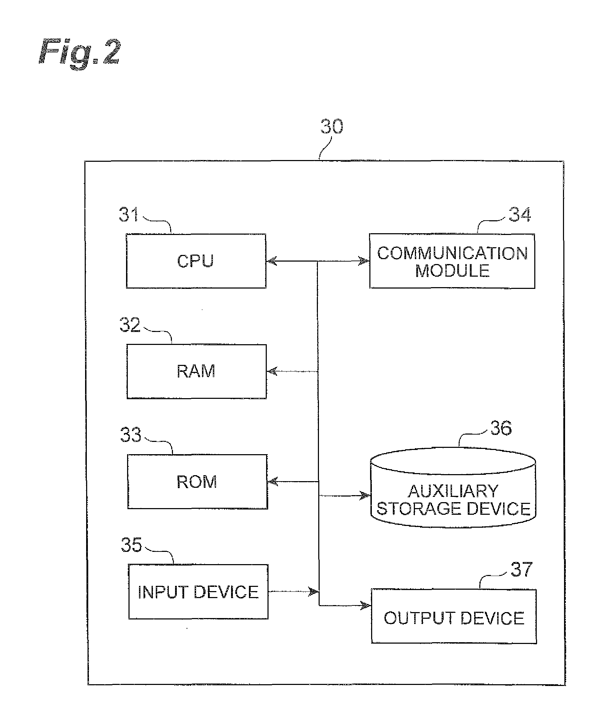

Fig. 2 is a block diagram showing the hardware configuration of a computer included in the data search server apparatus 10 according to an embodiment of the present invention. The computer 30 included in the data search server apparatus 10 is physically configured as an information processing apparatus that includes a CPU 31, a RAM 32 and a ROM 33 as a main storage device, an auxiliary storage device 36 such as a hard disk device, an input device 35 such as an input key, a touch panel, and a mouse as an input device, an output device 37 such as a display and a speaker, and a communication module 34 controlling transmission and reception of data to and from other terminal device and server apparatus through the communication network NW. The functions implemented by the data search server apparatus 10 are implemented by reading a predetermined program on hardware including the CPU 31 and the RAM 32 shown in Fig. 2 to allow the communication module 34, the input device 35, and the output device 37 to operate under the control of the CPU 31 and by reading from and writing into the RAM 32 and the auxiliary storage device 36.

The function of each component of the data search server apparatus 10 will now be described in detail.

Returning to Fig. 1, the data search server apparatus 10 includes, as functional components, a search target data storage unit 11, an index creation unit 12, a search unit (search means) 13, a linked search unit (linked search means) 14, a hierarchical structure specifying unit (hierarchical structure specifying means) 15, an output unit (output means) 16, an index storage unit 17, and a communication unit 18.

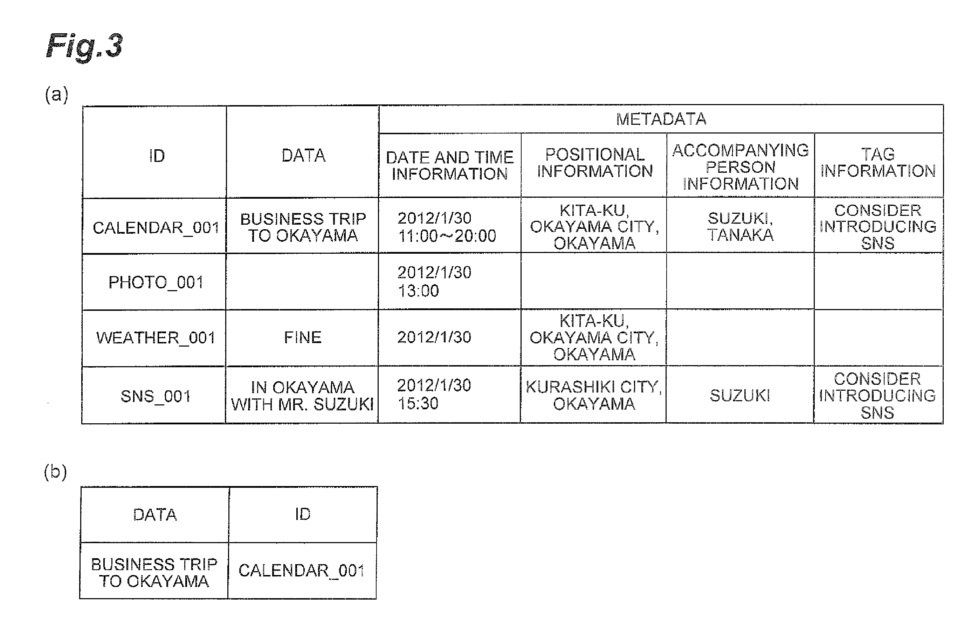

The search target data storage unit 11 stores a plurality of pieces of search target data, Each piece of the search target data is data including text data and image data, for example, schedule data 170, SNS data 171, photo data 172, news data 173, weather data 174, or transfer guide data 175. Fig. 3(a) shows an example of the search target data. As shown in the figure, one piece of text data includes an ID (for example, "calendar_001") used in a search to identify the text data and a data content (for example, "business trip to Okayama"). As pieces of metadata, which are attached data describing information attached to the text data, date and time information (for example, "2012/1/30 11:00-20:00"), positional information (for example, "Kita-ku, Okayama City, Okayama Prefecture"), accompanying person information (for example, "Suzuki, Tanaka"), and tag information (for example, "consider introducing SNS") are further stored in association with the ID. Among the pieces of metadata, the date and time information and the positional information are information automatically registered through data registration in connection with the text data, and the accompanying person information and the tag information are text information (user registration information) that can be optionally registered as metadata by the user when registering data. The search target data may not necessarily be stored in the search target data storage unit 11 of the data search server apparatus 10 and may be retained in another server apparatus and acquired from the server apparatus through an application program interface (API) or the like.

The index creation unit 12 creates an index based on the search target data stored in the search target data storage unit 11. The creation of the index eliminates the need for searching through the entire search target data during a data search and enables an efficient search. The created index information is stored into the index storage unit 17. An illustration of the index stored in the index storage unit 17 is shown in Fig. 3(b). As shown in the figure, the index for searching for the data content "business trip to Okayama" is stored to be associated with the ID ("calendar_001") that identifies the data corresponding to the index.

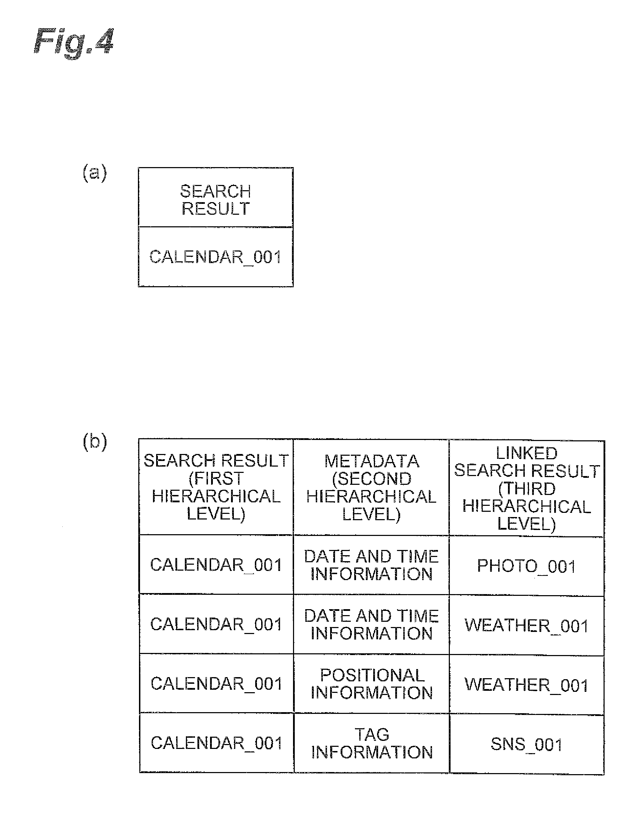

The search unit 13 searches a plurality of pieces of search target data stored in the search target data storage unit 11 for keyword-matching data including a search keyword. The search keyword is a keyword input by the user, transmitted from the communication unit 24 of the terminal device 20 to the data search server apparatus 10 and received by the communication unit 18. The search unit 13 performs a search with the index. The keyword-matching data is not limited to data exactly matching the search keyword but may be data including the search keyword. If keyword-matching data exists, the search unit 13 extracts, as a linked search keyword, the metadata (date and time information, positional information, accompanying person information, and tag information) attached to the keyword-matching data. For example, in the example of search target data shown in Fig. 3 (a), when the search keyword is "business trip to Okayama," it matches the index stored in the index storage unit 17 shown in Fig. 3(b). In this case, the data including the ID "calendar_001" shown in Fig. 4(a) is the keyword-matching data, and the metadata attached to the data, "2012/1/30 11:00-20:00" (date and time information), "Kita-ku, Okayama City, Okayama Prefecture" (positional information), "Suzuki, Tanaka" (accompanying person information), and "consider introducing SNS" (tag information) are the linked search keywords.

The linked search unit 14 searches a plurality of pieces of search target data stored in the search target data storage unit 11 for whether there exists linked matching data to which metadata close to the linked search keyword is attached. In the search for the linked matching data, the search is conducted through metadata of the same item. For example, in the example of search target data shown in Fig. 3 (a), when the data including "business trip to Okayama" is keyword-matching data, the date and time information "2012/1/30 11:00-20:00" is extracted as a linked search keyword. In this case, in a linked search, the date and time information of the search target data is searched for date and time information close to "2012/1/30 11:00-20:00" that is the linked search keyword. The wording "close to the linked search keyword" means that the match may not be exact. For example, when the linked search keyword of the date and time information is "2012/1/30 11:00-20-00," the followings can be considered to be close data because they are included in a certain time range: data ("2012/1/30") in which only a year, month, and date are input and the year, month, and date are matched; data ("2012/1/30 18:00-22:00") whose year, month, and date are matched and whose time period is partially matched; and data ("2012/1/30 21:00-23:00") whose time period and the time period indicated by the linked search keyword have a time period therebetween that is not longer than a predetermined time. As for the positional information, when the linked search keyword is a geographical name "Kita-Ku, Okayama City, Okayama Prefecture," matching of the geographical name (including partial matching of the geographical name, such as a prefecture name, a city name, or a town name) may be determined, or spatial proximity (whether close or not) may be determined by converting the geographical name into latitude and longitude. When the linked search keyword is values of latitude and longitude, spatial proximity may be determined by the values of latitude and longitude, or matching of the geographical name (including partial matching) may be determined by converting the values of the latitude and longitude into the corresponding geographical name. In the example of search target data shown in Fig. 3(a), when "business trip to Okayama" is the keyword-matching data, data "photo_001" (date and time information is close), data "weather 001" (date and time information is close, and positional information is matched), and data "SNS_001" (tag information is matched) are specified as linked matching data.

The hierarchical structure specifying unit 15 is hierarchical structure specifying means for generating the keyword-matching data found by the search unit 13 and the linked matching data found by the linked search unit 14 in different hierarchical levels. Fig. 4(b) shows an example of the hierarchical structure data generated by the hierarchical structure specifying unit 15. The first hierarchical level is keyword-matching data. The second hierarchical level is the item name of the metadata (date and time information, positional information, accompanying person information, or tag information) of the linked matching data. The third hierarchical level is the linked matching data. When a hierarchy is generated, two hierarchical levels may be generated rather than three hierarchical levels, and in this case, the first hierarchical level is the keyword-matching data, and the second hierarchical level is the linked matching data. The hierarchical structure data hierarchically shows the relation between the keyword-matching data found based on the search keyword and a plurality of pieces of linked matching data found to be linked with the data.

The output unit 16 outputs the keyword-matching data and the linked matching data. The data output by the output unit 16 is transmitted to the terminal device 20 by the communication unit 18. That is, the output unit 16 refers to the hierarchical structure data generated by the hierarchical structure specifying unit 15 and outputs the keyword-matching data and the linked matching data.

The function of each component of the terminal device 20 will now be described in details. As shown in Fig. 1, the terminal device 20 includes a data registration unit 21, a search keyword input unit 22, a data search result display unit 23, and a communication unit 24.

The data registration unit 21 accepts search target data to be stored in the search target data storage unit 11, based on a user operation, and registers the accepted data into the data search server apparatus 10. For example, when the user updates the schedule data 170 or the SNS data 171, the updated information is registered as search target data in the search target data storage unit 11. The data registration unit 21 accepts user registration data (accompanying person information and tag information) that can be optionally registered by the user as metadata and registers the accepted user registration data into the data search server apparatus 10. In a case where search target data is not stored in the search target data storage unit 11 of the data search server apparatus 10 but is retained in another server apparatus, the data registration unit 21 registers search target data into that server apparatus.

The search keyword input unit 22 accepts input of a search keyword based on a user's operation. The keyword accepted by the search keyword input unit 22 is transmitted to the data search server apparatus 10 through the communication unit 24. The accepted keyword is set as a search keyword in a search by the search unit 13.

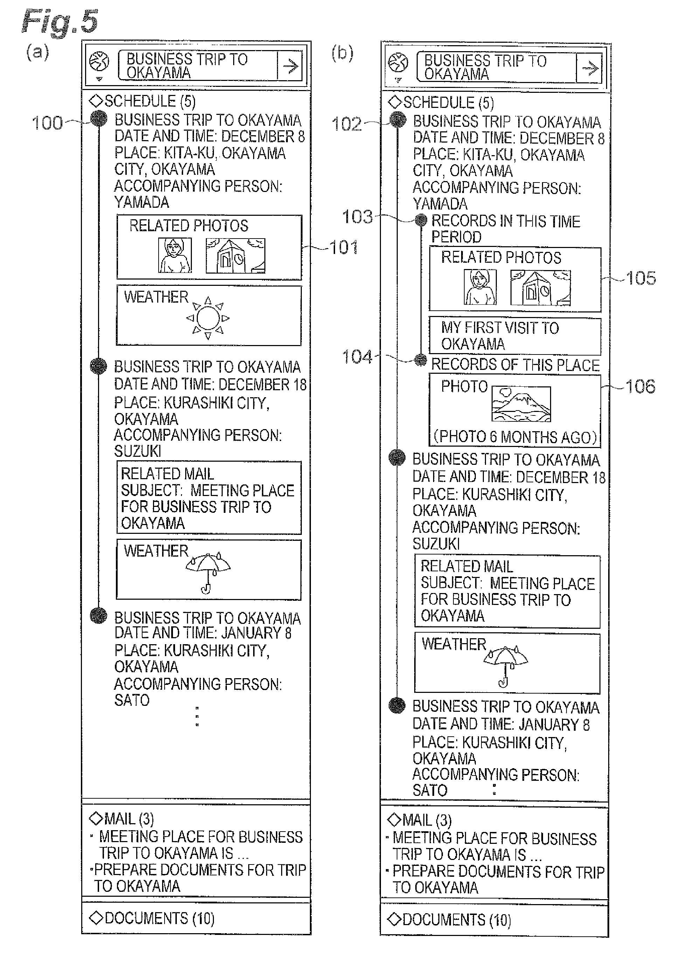

The data search result display unit 23 displays the keyword-matching data and the linked matching data output by the output unit 16. When hierarchical structure data is output by the output unit 16, the pieced of data each are displayed in different hierarchical levels. Fig. 5 includes diagrams showing display examples of search results in the terminal device 20 according to the embodiment of the present invention. Fig. 5(a) shows a display example in which the hierarchy is displayed in two hierarchical levels, and Fig. 5(b) shows a display example in which the hierarchy is displaced in three hierarchical levels. In the case of the display in two hierarchical levels in Fig. 5(a), the keyword-matching data and the metadata of the keyword-matching data in the first hierarchical level appear as shown in a display section 100, and the linked matching data in the second hierarchical level appears below the display section 100 as shown in a display section 101. In the case of the display in three hierarchical levels in Fig. 5(b), the keyword-matching data and the metadata of the keyword-matching data in the first hierarchical level appear as shown in a display section 102. The metadata item names of the linked matching data in the second hierarchical level appear below the display section 102 as shown in a display section 103 and a display section 104. The linked matching data in the third hierarchical level appears at a place corresponding to the metadata item name in the second hierarchical level. More specifically, the linked matching data corresponding to the display section 103 appears below the display section 103 as shown in a display section 105, and the linked matching data corresponding to the display section 104 appears below the display section 104 as shown in a display section 106. In Fig. 5, only the date and time information, the positional information, and the accompanying person information are shown as metadata displayed in the first hierarchical level, and tag information is not shown. However, tag information may also be displayed if the tag information is registered.

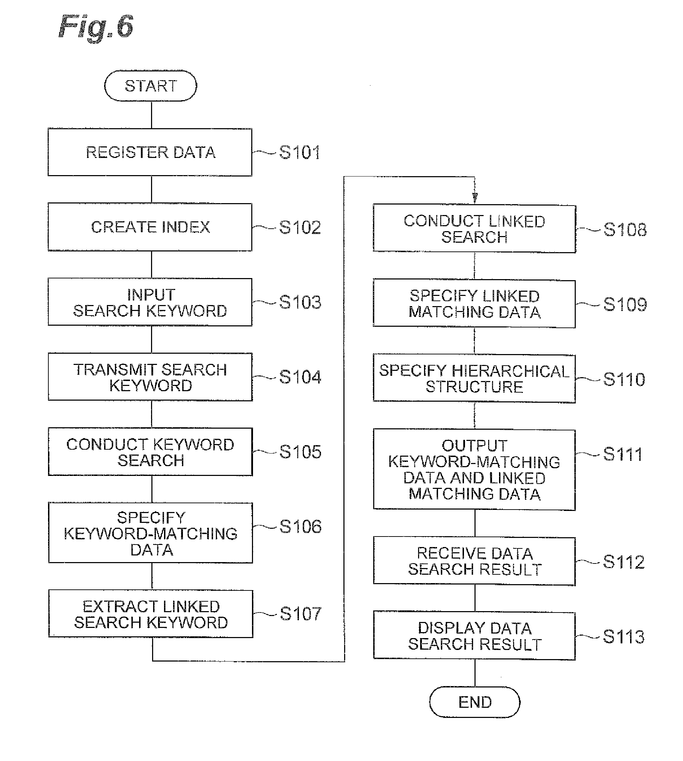

Referring to Fig. 6, the operation of the data search system 1 will be described below, and a data search method in the data search system 1 will be detailed. This figure is a flowchart showing the operation during a data search by the data search system 1.

First, a user operation on the terminal device 20 (operation for updating schedule data or SNS data) is accepted, and search target data is registered by the data registration unit 21 (step S101). Upon data registration, the index creation unit 12 creates an index based on the registered search target data (step S102).

Subsequently, when the user conducts a data search from the terminal device 20, the search keyword input unit 22 accepts a search keyword input through a user operation (keyword input by the user) (step S103). The search keyword is transmitted from the communication unit 24 of the terminal device 20 to the communication unit 18 of the data search server apparatus 10 (step S104). Next, in the data search server apparatus 10, the search unit 13 conducts a keyword search based on the search keyword transmitted from the terminal device 20 (step S105). If there exists data including the search keyword in the search target data, the search unit 13 specifies the data as keyword-matching data (S106). The search unit 13 further extracts, as a linked search keyword, metadata (date and time information, positional information, accompanying person information, and tag information) attached to the keyword-matching data (step S107).

Next, the linked search unit 14 conducts a linked search based on the linked search keyword (step S108). If there exist, among the search target data, data to which metadata close to the linked search keyword is attached, the linked search unit 14 specifies that data as linked matching data (step S109). Next, the hierarchical structure specifying unit 15 generates hierarchical structure data indicating a hierarchical structure of the keyword-matching data and the linked matching data (step S110). Here, the hierarchical structure is specified in three or two hierarchical levels.

After the hierarchical structure is specified in step S110, the output unit 16 outputs the keyword-matching data and the linked matching data in accordance with a generated hierarchy (step S111). The output data is communicated through the communication unit 18 and the communication unit 24 and received as a search result by the terminal device 20 (step S 112). The received data is output in such an output form as to allow the user to recognize different hierarchical levels, and is displayed by the data search result display unit 23 (step S113).

In the data search system 1 and the data search method in the data search system 1 as described above, when data including a search keyword exists, the date and time information included in the attached data of the data is extracted as a linked search keyword, and, if a plurality of pieces of data other than such data include any piece of data having attached data close to the linked search keyword, such piece of data can be retrieved and output as data indirectly related to the search keyword. As a result, a plurality of pieces of data can be retrieved in a linked manner based on not only the search keyword but also the attached data of the keyword-matching data, so that even data that does not include the search keyword can be retrieved and output as data highly relevant to the search keyword. Since a search is conducted based on the date and time information attached to the data including the search keyword, the linked matching data is likely to be data highly relevant to the search keyword in terms of time. According to the present invention, all the data highly relevant to the search keyword in terms of time can be output as search results.

In the data search system 1, the attached data further includes positional information, and the positional information included in the attached data attached to the keyword-matching data is extracted as a linked search keyword, so that all the related data highly relevant to the search keyword in terms of location can be more reliably presented as search results.

In the data search system 1, the attached data further includes user registration information, which is text data that can be optionally registered by the user. The search unit 13 extracts, as a linked search keyword, the user registration information included in the attached data attached to the keyword-matching data, so that the related data that is related to the search keyword through the information optionally registered by the user can be presented as a search result based on that information.

The data search system 1 further includes the hierarchical structure specifying unit 15 that generates the keyword-matching data and the linked matching data in different hierarchical levels. The output unit 16 outputs the keyword-matching data and the linked matching data in accordance with a hierarchy generated by the hierarchical structure specifying unit 15, so that the keyword-matching data and the linked matching data are separately generated, thereby enabling a data output that allows the user to easily recognize the relevance to the search keyword. The hierarchy may include three or two hierarchical levels. In the case of three hierarchical levels, it is possible to recognize by which metadata the linked matching data is connected, and the search result display is more organized and easier to understand for the user.

The present invention is not limited to the foregoing embodiment. For example, the components of the data search server apparatus shown in Fig. 1 may be entirely or partially included in the terminal device 20 used by the user.

Here, in the data search system according to the present invention, the linked search means may search for linked matching data to which attached data including date and time information that partially matches the time period indicated by the linked search keyword is attached. The linked search means may search for linked matching data whose attached data includes date and time information such that a time period between the time period indicated by the linked search keyword and the date and time information is not longer than a predetermined time.

In the data search system according to the present invention, the attached data may further include positional information. The search means may extract, as a linked search keyword, the positional information included in the attached data attached to the keyword-matching data. In this case, the positional information is employed as attached data, so that all the related data highly relevant to the search keyword in terms of location can be presented as search results.

In the data search system according to the present invention, the attached data may further include user registration information which is text data that can be optionally registered by the user. The search means may extract, as a linked search keyword, the user registration information included in the attached data attached to the keyword-matching data. In this case, the related data that is related to the search keyword through the information optionally registered by the user can be presented as a search result, based on that data.

The data search system according to the present invention further includes hierarchical structure specifying means for generating the keyword-matching data and the linked matching data in different hierarchical levels. The output means may output the keyword-matching data and the linked matching data in accordance with a hierarchy generated by the hierarchical structure specifying means. With such a configuration, the keyword-matching data and the linked matching data that does not include the search keyword but is assumed to be highly relevant are separately generated, thereby enabling a data output that allows the user to easily recognize the relevance to the search keyword.

### Industrial Applicability

The present invention is applicable to a data search system and a data search method and can present all the data highly relevant to a search keyword as search results.

### Reference Signs List

1 ... data search system, 10 ... data search server apparatus, 13 ... search unit (search means), 14 ... linked search unit (linked search means), 15 ... hierarchical structure specifying unit (hierarchical structure specifying means), 16 ... output unit (output means).

## Claims

1. A data search system that conducts a search through a plurality of pieces of search target data to each of which at least date and time information is attached as attached data, the data search system comprising:
search means for searching the plurality of pieces of search target data for keyword-matching data including a search keyword, and extracting, as a linked search keyword, the date and time information on a time period that is included in the attached data attached to the keyword-matching data;
linked search means for searching the plurality of pieces of search target data for whether there exists linked matching data to which attached data including a time period that is close to the time period of the linked search keyword is attached; and
output means for outputting the keyword-matching data and the linked matching data.

2. The data search system according to claim 1, wherein the linked search means searches for linked matching data to which attached data including date and time information that partially matches the time period indicated by the linked search keyword is attached.

3. The data search system according to claim 1, wherein the linked search means searches for linked matching data whose attached data includes date and time information such that a time period between the time period indicated by the linked search keyword and the date and time information is not longer than a predetermined time.

4. The data search system according to any one of claims 1 to 3, wherein
the attached data further includes positional information, and
the search means extracts, as a linked search keyword, the positional information included in the attached data attached to the keyword-matching data.

5. The data search system according to any one of claims 1 to 4, wherein
the attached data further includes user registration information which is text data that is optionally registered by a user, and
the search means extracts, as a linked search keyword, the user registration information included in the attached data attached to the keyword-matching data.

6. The data search system according to any one of claims 1 to 5, further comprising hierarchical structure specifying means for generating the keyword-matching data and the linked matching data in different hierarchical levels, wherein
the output means outputs the keyword-matching data and the linked matching data in accordance with a hierarchy generated by the hierarchical structure specifying means.

7. A data search method in which a search is conducted through a plurality of pieces of search target data to each of which at least date and time information is attached as attached data, the data search method comprising:
a search step, by search means, of searching the plurality of pieces of search target data for keyword-matching data including a search keyword, and extracting, as a linked search keyword, the date and time information included in the attached data attached to the keyword-matching data;
a linked search step, by linked search means, of searching the plurality of pieces of search target data for whether there exists linked matching data to which attached data close to the linked search keyword is attached; and
an output step, by output means, of outputting the keyword-matching data and the linked matching data.
